# EUROPÄISCHE PATENTSCHRIFT

(11) **EP 1 059 024 B1**
(45) Veröffentlichungstag und Bekanntmachung des Hinweises auf die Patenterteilung: **27.10.2004**
(21) Anmeldenummer: 00112183.9
(22) Anmeldetag: 07.06.2000
(51) Int. Cl.: A01F 15/07

(54) **Rundballenpresse für landwirtschaftliche Halmgüter**
Rotobaler for agricultural produce
Presse à balles rondes pour produits agricoles

(30) Priorität: 11.06.1999 DE 19926589
(43) Veröffentlichungstag der Anmeldung: 13.12.2000
(73) Patentinhaber: Welger Maschinenfabrik GmbH, 38304 Wolfenbüttel (DE)
(72) Erfinder: Wilkens, Dieter, Dr.-Ing., 38302 Wolfenbüttel-Ahlum (DE); Honhold, Joost, 38302 Wolfenbüttel (DE)

(56) Entgegenhaltungen:
- DE-A- 2 517 340
- DE-A- 3 118 663
- DE-A- 19 751 985
- FR-A- 2 509 121
- FR-A- 2 663 191

## Beschreibung

Die Erfindung betrifft eine Rundballenpresse nach dem Oberbegriff des Patentanspruches 1.

Zur Verriegelung der Preßraumgehäuseteile sind beispielsweise aus der DE 24 43 838 A1 und der DE 31 18 663 A1 mechanische Verriegelungsvorrichtungen bekannt. Die starre Verriegelung gewährleistet hohe Preßdichten und gleichbleibende Ballendurchmesser. Um die Antriebe der Preßelemente und die Preßelemente selbst gegen Überlastungen zu schützen, ist es üblich, im Hauptantriebsstrang der Rundballenpresse entweder eine Scherschrauben-Sicherung, Reibkupplung oder auch eine automatisch arbeitende Nockenschaltkupplung zu verwenden. Die Auslösung der Umschnürungsvorrichtung erfolgt üblicherweise manuell oder automatisch beim Erreichen eines voreinstellbaren Preßdruckes.

Beim Abscheren der Scherschraube, beim Ansprechen der Reibkupplung oder der Nockenschaltkupplung, oder auch beim Durchrutschen der Preßelemente auf dem Ballenumfang weisen diese so ausgestalteten Rundballenpressen den großen Nachteil auf, daß ein z. B. bei schwierigen Erntegutbedingungen im Preßraum stehengebliebener, noch nicht umschnürter Ballen nicht wieder in Drehung versetzt werden kann, ohne vorher die Preßraumgehäuseteile zu entriegeln. Aufgrund der hohen Expansionskraft des gepreßten Materials schwenkt das Hintergehäuse aber um 30 - 50 cm auf. Dieser große Öffnungsweg hat zur Folge, daß der Ballen einen übergroßen Durchmesser hat und entweder gar nicht oder nur unvollständig umschnürt werden kann, so daß in der Praxis ein erneutes Aufnehmen und Pressen dieses unbrauchbaren Ballens erforderlich ist.

Bei einer seit langem auf dem Markt befindlichen Rundballenpresse der Firma Claas, Typenbezeichnung Rollant 66, 46 Silage, 46 Roto Cut, Druckvermerk 8/95, sind die beiden Preßraum-Gehäuseteile hydraulisch verriegelt. Zum Schutz der Preßkammer vor Überlastungen ist eine hydraulische Überlastungsvorrichtung vorgesehen, welche beim Überschreiten des voreingestellten Preßdruckes über ein Druckbegrenzungsventil Öl abläßt und dadurch das Hintergehäuse öffnet. Nachteilig auch hier, daß der Öffnungsweg des Hintergehäuses unbegrenzt ist und mit dieser Ausgestaltung nur übergroße, unvollständig abgebundene Ballen entstehen. Es besteht auch keine Möglichkeit, das aufgeschwenkte Hintergehäuse gegen den expandierten Ballen zu schließen, weil der notwendige höhere Schließdruck aufgrund des Druckbegrenzungsventiles nicht erzeugt werden kann.

Der Erfindung liegt die Aufgabe zugrunde, trotz eingetretenen Stillstandes des Rundballens in der Rundballenpresse seine Fertigstellung, d. h. Umschnürung und Ballenausstoß zu ermöglichen und einen Ballendurchmesser zu gewährleisten, der nur wenig oder gar nicht vom Ballendurchmesser im Normalbetrieb abweicht.

Die gestellte Aufgabe wird mit den Merkmalen des Patentanspruches 1 gelöst.

Versuche in der Praxis haben ergeben, daß das geringfügige, begrenzte Öffnen des Hintergehäuses um ca. 20 bis 100 mm ausreicht, um ein Wiederandrehen des Ballens zu erreichen und die Aufrechterhaltung der Ballenrotation während der Umschnürung des Ballens zu gewährleisten, weil die Entlastung der Preßelemente eine Reduzierung der Rollwiderstände des Ballens und die Mehrfachüberrollungen des Ballens durch die Preßelemente bei fehlender Gutzufuhr eine Reduzierung des Ballendurchmessers bewirken. Ein weiterer Vorteil besteht darin, daß das Hintergehäuse während der Umschnürung sogar wieder in seine geschlossene Betriebsstellung gezogen werden kann. Dieses ist deshalb möglich, weil der Ballen durch das geringfügige, begrenzte Öffnen des Hintergehäuses nur relativ wenig expandieren kann.

Baulich einfach und sowohl zum begrenzten Öffnen des Hintergehäuses als auch zum Schließen geeignet ist eine Ausführungsform gemäß Anspruch 2. Hierbei kann ein als Exzenter oder als Nocken verdrehbar ausgebildeter Verriegelungszapfen manuell, elektrisch oder hydraulisch betätigt werden, um Entlastungen von ca. 20 bis 40 mm Öffnungsweg zu erreichen. In kinematischer Umkehr kann auch die Lagerstelle jeder Verriegelungsklinke entsprechend die gleiche Funktion erfüllen.

Bei einer Ausführungsform gemäß Anspruch 3 sind auf jeder Preßraumseite zwei Verriegelungsklinken vorgesehen, deren wirksame Verriegelungsnasen gegeneinander um den gewünschten Öffnungsweg versetzt sind. Die in Öffnungsrichtung versetzte Verriegelungsklinke ist im Normalbetrieb außerhalb des Wirkungsbereiches des Verriegelungszapfens und wird nur bei Störbetrieb in Eingriffsstellung gebracht, wobei dieser nach Entriegelung der ersten Verriegelungsklinke und Öffnung des Hintergehäuses während der Fertigstellung des Ballens die Verriegelung übernimmt und entriegelt wird zum Ballenausstoß.

Eine besonders vorteilhafte Ausführungsform wird dann erreicht, wenn Mittel vorgesehen sind, welche zum Überführen des Hintergehäuses aus der teiloffenen Verriegelungsstellung in die ursprüngliche, voll geschlossene Betriebsstellung dienen. Auf diese Art läßt sich der Ballen trotz Ballenstillstandes einerseits in Drehung versetzen und mit einem Ballendurchmesser fertigstellen, der dem Normaldurchmesser entspricht.

Weitere zweckmäßige Ausbildungen ergeben sich aus den Unteransprüchen.

Anhand der Zeichnungen werden mehrere Ausführungsformen des Erfindungsgegenstandes erläutert. Es zeigen:
- Fig.1: eine schematische Seitenansicht einer Rundballenpresse mit einer Verriegelungsvorrichtung bekannter Bauart,
- Fig. 2: eine vergrößerte Teilseitenansicht der efindungsgemäßen Verriegelungsvorrichtung bei geschlossener Betriebsstellung des Hintergehäuses,
- Fig. 3: eine Ansicht gemäß Fig. 2 bei teilgeöffneter, verriegelter Stellung des Hintergehäuses,
- Fig. 4, 6, 9, 11: jeweils eine andere Ausführungsform in einer Ansicht gemäß Fig. 2 bei geschlossener Betriebsstellung des Hintergehäuses,
- Fig. 8: eine weitere Teilvariante gemäß Figur 6 und

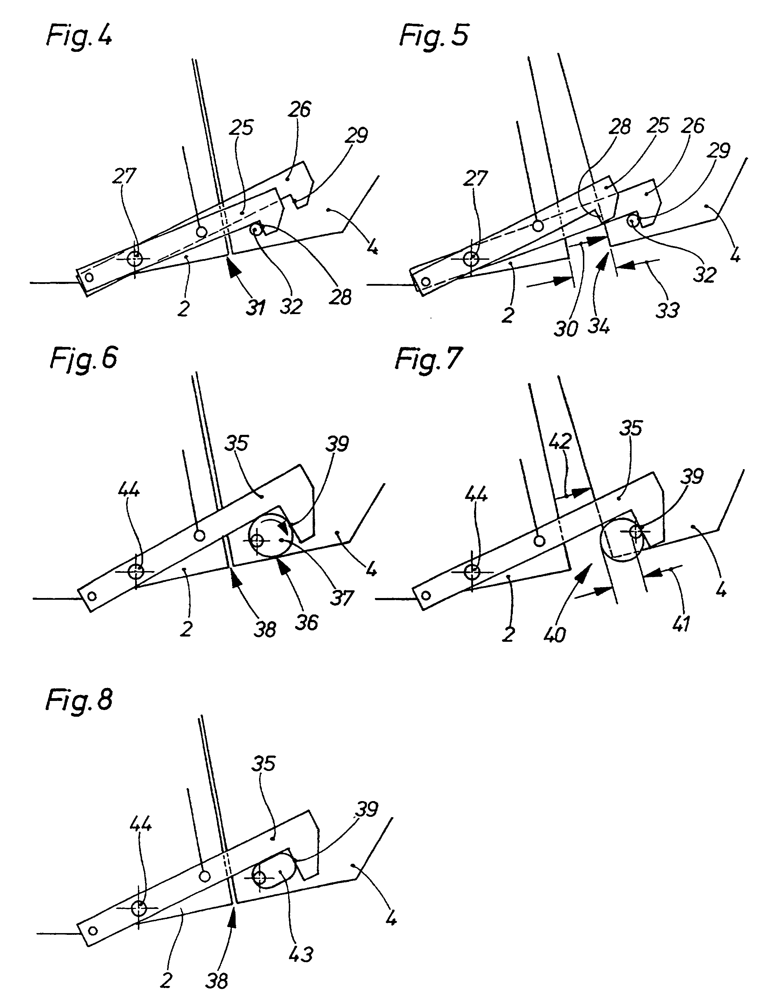

- Fig. 5, 7, 10, 12: jeweils eine andere Ausführungsform in einer Ansicht gemäß Fig. 4, 6, 9, 11 bei teilgeöffneter, verriegelter Stellung des Hintergehäuses.

Die Rundballenpresse weist ein Fahrgestell 1 auf, welches ein zylindrisches Preßraumgehäuse trägt, bestehend aus einem gestellfesten Vordergehäuse 2 und einem an diesem um eine obere Schwenkachse 3 aufklappbar gelagerten Hintergehäuse 4. Das Preßraumgehäuse wird in radialer Richtung von Preßelementen, z. B. Riemen, Walzen 5 oder Förderketten gebildet, die teilweise im Vordergehäuse 2 und teilweise im Hintergehäuse 4 ortsfest aber drehbar angeordnet sind und einen im Volumen konstanten Preßraum 6 begrenzen. In axialer Richtung wird das Preßraumgehäuse durch im Vordergehäuse 2 in einem der Ballenbreite entsprechenden Abstand nebeneinander angeordnete, vordere Seitenwände 7 und durch in gleicher Weise im Hintergehäuse 4 angeordnete, hintere Seitenwände 8 begrenzt. In geschlossener Betriebsstellung 9 des Hintergehäuses 4 liegt die Vorderkante 10 der hinteren Seitenwände 8 an der hinteren Kante 11 des Vordergehäuses 2 an. Im unteren Bereich jeder vorderen Seitenwand 7 ist außen eine Verriegelungsklinke 12 auf einem Bolzen 13 gelagert, die jeweils in einen am Hintergehäuse 4 befestigten Verriegelungszapfen 14 einrastet und so das Hintergehäuse 4 mit dem Vordergehäuse 2 verriegelt Die Entriegelung der Verriegelungsklinken 12 erfolgt durch eine Koppelstange 15 durch die Hydrozylinder 16 zum Aufschwenken des Hintergehäuses 4 in an sich bekannter Weise.

Vorn ist ein Einzugsspalt 17 im Preßraumgehäuse freigelassen, durch den das Gut von einer Aufsammeltrommel 18 in den Preßraum 6 gefördert und durch die angetriebenen Preßelemente 5 zu einem Rundballen geformt wird.

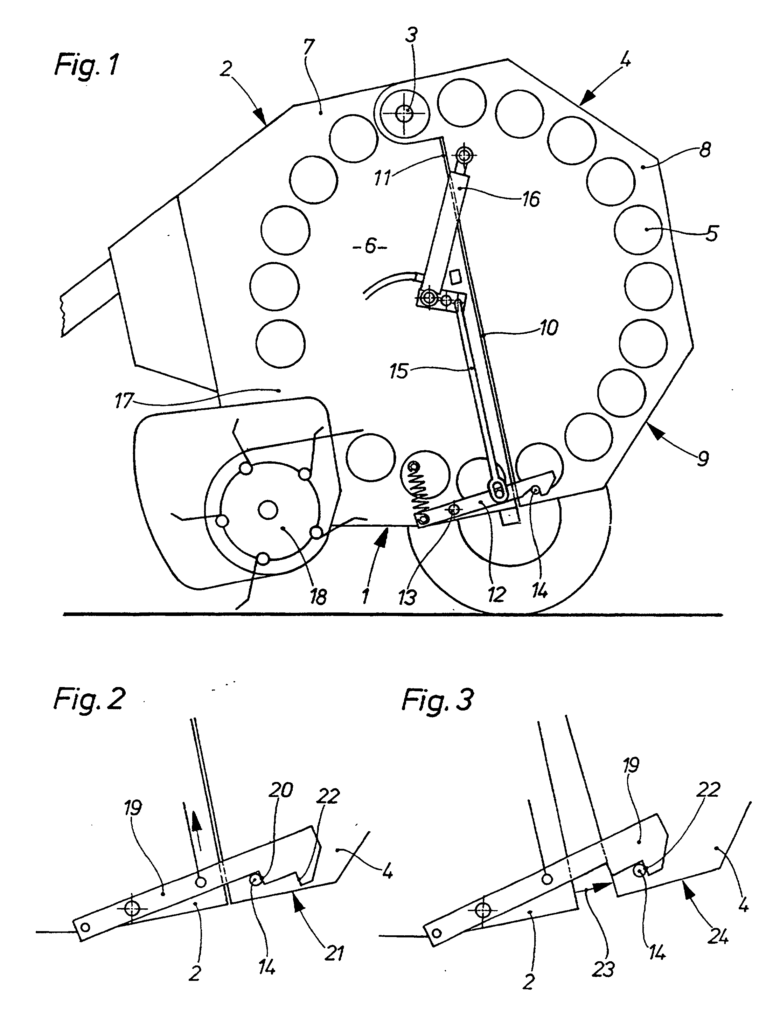

In der Ansicht von Figur 2 ist erkennbar, daß eine Verriegelungsklinke 19 außer einer ersten Verriegelungsnase 20, die Vorder- 2 und Hintergehäuse 4 in geschlossener Betriebsstellung 21 verriegelt, zusätzlich eine zweite Verriegelungsnase 22 aufweist, die im Abstand von ca. 20 bis 100 mm nach rechts, also in Öffnungsrichtung 23 des Hintergehäuses 4 und nach unten gegenüber der ersten Verriegelungsnase 20 versetzt angeordnet ist. Nach Anheben der Verriegelungsklinke 19 um den Durchmesser des Verriegelungszapfens 14 schwenkt das Hintergehäuse 4 durch den Druck eines im Preßraum 6 stehengebliebenen Ballens selbsttätig in Öffnungsrichtung 23 auf und wird in teiloffener Stellung 24 durch die zweite Verriegelungsnase 22 verriegelt, siehe Figur 3. Diese teiloffene Stellung 24 ermöglicht ein Andrehen des Ballens und seine Umschnürung sowie den Ballenausstoß nach Entriegelung der zweiten Verriegelungsnase 22 und Aufklappen des Hintergehäuses 4 um etwa 90°.

Nach Ausstoß des Rundballens wird das Hintergehäuse 4 zugeschwenkt und in geschlossener Betriebsstellung 21 wieder durch die erste Verriegelungsnase 20 verriegelt.

Gemäß Fig. 4 ist zusätzlich zu einer ersten Verriegelungsklinke 25 eine zweite Verriegelungsklinke 26 vorgesehen. Die zweite Verriegelungsklinke 26 ist koaxial zur ersten auf einem gestellfesten Zapfen 27 gelagert und etwa 20 bis 100 mm länger ausgeführt, so daß die zweite Verriegelungsnase 29 gegenüber der ersten 28 um diesen Abstand in Öffnungsrichtung 30 des Hintergehäuses 4 versetzt ist. Das Hintergehäuse 4 ist in Fig. 4 durch die erste Verriegelungsklinke 25 mit dem Vordergehäuse 2 in geschlossener Betriebsstellung 31 mechanisch verriegelt. Durch eine nicht dargestellte Betätigungs- und Haltemechanik wird die zweite Verriegelungsklinke 26 im Normalbetrieb außerhalb des Eingriffsbereiches eines am Hintergehäuse 4 befestigten Verriegelungszapfens 32 gehalten. Der Ballenausstoß erfolgt, nachdem die erste Verriegelungsklinke 25 entriegelt und das Hintergehäuse 4 um ca. 90° nach oben aufgeschwenkt wird.

Bleibt ein Ballen während des Preßbetriebes im Preßraum 6 stehen, was durch einen geeigneten Sensor oder im Fall einer Nockenabschaltkupplung durch akustische Signale (Rattern) oder auch durch Nichteinzug des Materials im Aufsammlerbereich erkennbar ist, wird die Gutzufuhr gestoppt, die zweite Verriegelungsklinke 26 in die gleiche Stellung wie die erste 25 gebracht und die erste Verriegelungsklinke 26 entriegelt, siehe Fig. 5. Dadurch weicht das Hintergehäuse 4 in Öffnungsrichtung 30 um den Abstand 33 aus und wird in dieser teilgeöffneten Stellung 34 durch die zweite Verriegelungsnase 29 gehalten. Durch Einschalten des Antriebes der Preßelemente 5 kann der Rundballen wieder in Drehung versetzt werden, wird umschnürt und nach Entriegelung der zweiten Verriegelungsklinke 26 und Öffnung des Hintergehäuses 4 aus dem Preßraum 6 gestoßen.

In Figur 6 ist eine Verriegelungsklinke 35 dargestellt, die mit einer verdrehbar, als Verriegelungszapfen ausgebildeten Exzenterscheibe 36 zusammenwirkt. Wie in Figur 6 gezeigt, ist der exzentrische Teil 37 in geschlossener Betriebsstellung 38 des Hintergehäuses 4 benachbart zur Verriegelungsnase 39 angeordnet. Zur in Figur 7 dargestellten, teilgeöffneten Stellung 40 des Hintergehäuses 4 wird die Exzenterscheibe 36 um 180° verdreht, wodurch das Hintergehäuse 4 um das Maß der Exzentrizität 41 in Öffnungsrichtung 42 ausweicht. Die Betätigung kann manuell, elektrisch oder hydraulisch, z. B. durch einen nicht dargestellten, mit einem Hydrozylinder gekoppelten Hebel erfolgen.

Figur 8 zeigt anstelle der Exzenterscheibe 36 einen verdrehbaren Nocken 43. Die Funktion ist ansonsten entsprechend der der Exzenterscheibe 36. Alternativ kann auch die Anlenkachse 44 der Verriegelungsklinke 35 als verdrehbare Exzenterscheibe oder als verdrehbarer Nocken ausgestaltet sein.

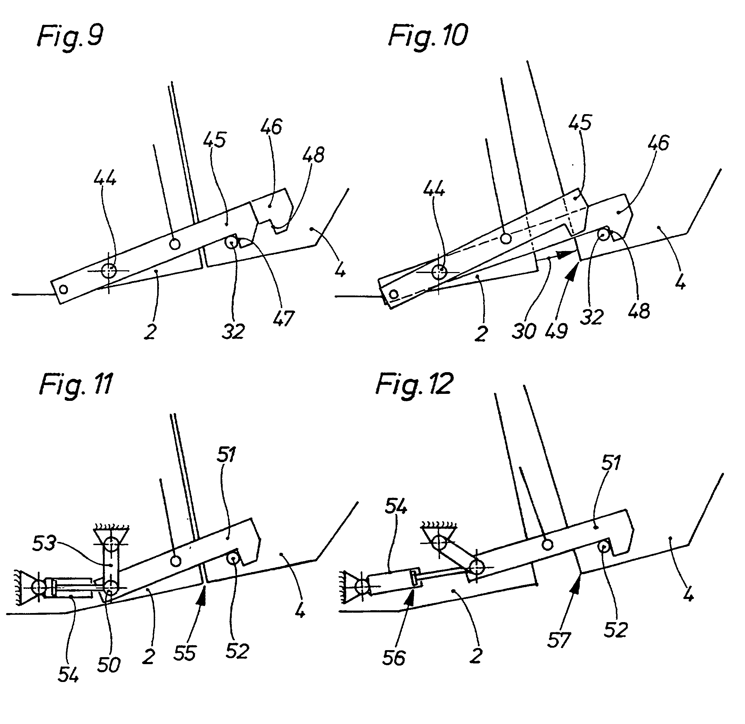

Bei der Ausführungsform gemäß Figur 9 ist eine erste Verriegelungsklinke 45, z. B. mechanisch mit einer zweiten Verriegelungsklinke 46 gekoppelt, welche im Abstand zu einer ersten Verriegelungsnase 47 versetzt eine zweite Verriegelungsnase 48 aufweist. Im Normalbetrieb verschwenken beide Verriegelungsklinken 45, 46 gleichzeitig, so daß nur die erste Verriegelungsklinke 45 zur Wirkung kommt.

Im Störbetrieb wird die zweite Verriegelungsklinke 46 von der ersten 45 entkoppelt, so daß nach Entriegelung der ersten Verriegelungsklinke 45 die zweite Verriegelungsklinke 46 die Verriegelung in teilgeöffneter Stellung 49 des Hintergehäuses 4 übernimmt, siehe Figur 10.

In Figur 11 ist die Anlenkachse 50 einer Verriegelungsklinke 51 nicht ortsfest ausgebildet, sondern verschwenk- oder verschiebbar durch geeignete Hilfsantriebe, z. B. Hydrozylinder. Alternativ kann auch ein Verriegelungszapfen 52 verschieb- oder verschwenkbar ausgebildet sein. Gemäß Figur 11 ist die Verriegelungsklinke 51 durch ein Laschenpaar 53 gelenkig am Vordergehäuse 2 angelenkt und mit einem doppeltwirkenden Hydrozylinder 54 verbunden. Im Normalbetrieb hält der voreinstellbare Druck im Hydrozylinder 54 beide Gehäuseteile 2, 4 in geschlossener Betriebsstellung 55. Der Kolbenweg des Hydrozylinders 54 ist so gewählt, daß dieser maximal 20 - 100 mm ausweichen kann und dann anschlägt. Im Störbetrieb wird der Druck im Hydrozylinder 54 vom Schlepper aus reduziert, so daß das Hintergehäuse 4 in die in Figur 12 gezeigte Anschlagstellung des Hydrozylinders 54 fährt, wodurch das Hintergehäuse 4 in eine teilgeöffnete Stellung 57 schwenkt. Nach Andrehen des Ballens kann auf besonders vorteilhafte Weise das Hintergehäuse 4 durch kolbenstangenseitige Druckbeaufschlagung des Hydrozylinders 54 in seine geschlossene Betriebsstellung 55 gemäß Figur 11 gezogen werden. Dadurch erfolgt die Umschnürung des Ballens mit Normaldurchmesser.

Besonders komfortabel ist es, die Rotation des Ballens oder das Ansprechen der Übertastkupplung abzutasten und dann automatisch eine Teilöffnung und Verriegelung des Hintergehäuses in Abhängigkeit von den Tastern einzusteuern und gleichzeitig dem Schlepperfahrer ein Signal über den Störbetrieb zu geben.

## Patentansprüche

1. Rundballenpresse für landwirtschaftliche Halmgüter, bestehend aus einem gestellfesten Vordergehäuse (2) und einem an diesem um eine obere horizontale Achse (3) zum Ballenausstoß in eine Entladestellung aufklappbar gelagerten Hintergehäuse (4), wobei Verriegelungsklinken (19, 25, 35, 45, 51) das Hintergehäuse (4) in geschlossenes Betriebsstellung mit dem Vordergehäuse (2) verriegeln und beim Erreichen eines voreinstellbaren Preßdrucks entriegeln, **dadurch gekennzeichnet, dass** Verstellmittel (36, 43, 54) oder zusätzliche Verriegelungsklinken (22, 26, 46) vorgesehen sind, durch deren Betätigung das Hintergehäuse 4 teilweise geöffnet und in den verriegelten Stellungen (24, 34, 40, 49, 57) gehalten wird, bevor die Verriegelungsklinken (19, 25, 35, 45, 51) zum Aufklappen des Hintergehäuses (4) entriegelt werden.

2. Rundballenpresse nach Anspruch 1, **dadurch gekennzeichnet, daß** die Verstellmittel einen verdrehbar als Exzenter (36) oder verdrehbar als Nocken (43) ausgebildeten Verriegelungszapfen oder in kinematischer Umkehr eine exzentrisch verstellbare Lagerstelle (44) der Verriegelungsklinke (35) umfassen.

3. Rundballenpresse nach Anspruch 1, **dadurch gekennzeichnet, daß** jeder Verriegelungsklinke (25, 45) eine zweite Verriegelungsklinke (26, 46) zugeordnet ist, deren Verriegelungsnase (29, 48) jeweils in Öffnungsrichtung (30) des Hintergehäuses (4) gegenüber der Verriegelungsnase (28, 47) der ersten Verriegelungsklinke (25, 45)versetzt angeordnet ist.

4. Rundballenpresse nach Anspruch 3, **dadurch gekennzeichnet, daß** die zweite Verriegelungsklinke (26) ständig in Entriegelungsposition gehalten und bei Bedarf in Verriegelungsposition gebracht wird, in welcher diese nach Entriegelung der ersten Verriegelungsklinke (25) und geringer Öffnung des Hintergehäuses (4) die Verriegelung beider Gehäuseteile (2, 4) darstellt

5. Rundballenpresse nach Anspruch 3, **dadurch gekennzeichnet, daß** die zweite Verriegelungsklinke (46) gemeinsam mit der ersten Verriegelungsklinke (45) entriegelt und nur bei Bedarf in Verriegelungsposition (49) gehalten wird, um nach Ausheben der ersten Verriegelungsklinke (45) und geringer Öffnung des Hintergehäuses (4) die Verriegelung beider Gehäuseteile (2, 4) darzustellen.

6. Rundballenpresse nach Anspruch 1, **dadurch gekennzeichnet, daß** eine Verriegelungsklinke (19) eine zweite (22), gegenüber der ersten Verriegelungsnase (20) mit Abstand in Öffnungsrichtung (23) des Hintergehäuses (4) versetzte Verriegelungsnase (22) aufweist.

7. Rundballenpresse nach Anspruch 1, **dadurch gekennzeichnet, daß** die Verriegelungsklinke (51) mittelbar oder unmittelbar mit einem Hydrozylinder (54) gekoppelt ist, und daß das geringfügige Öffnen des Hintergehäuses (4) durch Betätigung eines Steuerventiles vom Bediener erfolgt.

8. Rundballenpresse nach einem oder mehreren der vorhergehenden Ansprüche, **dadurch gekennzeichnet, daß** der Öffnungsweg des Hintergehäuses (4) zwischen geschlossener (21, 31, 38, 55) und teilgeöffneter (24, 34, 40, 49, 57) Verriegelungsposition etwa 20 bis 100 mm beträgt.

9. Rundballenpresse nach einem oder mehreren der vorhergehenden Ansprüche, **dadurch gekennzeichnet, daß** die Exzenter (36), Nocken (43) oder Verriegelungsklinken (19, 25, 26, 35, 45, 46, 51) mechanisch verriegelt und manuell betätigt werden, oder daß eine elektrische, hydraulische oder elektrohydraulische Betätigung erfolgt.

10. Rundballenpresse nach einem oder mehreren der vorhergehenden Ansprüche, **dadurch gekennzeichnet, daß** die Steuerung der Verstellmittel (36, 43, 51) oder der Verriegelungsklinken (19, 26, 46, 51) in Abhängigkeit von einem Sensor erfolgt, welcher einen Ballenstillstand signalisiert oder von einem Sensor, welcher ein Ansprechen einer Überlastsicherung signalisiert.

11. Rundballenpresse nach einem oder mehreren der vorhergehenden Ansprüche, **dadurch gekennzeichnet, daß** Mittel (36, 43, 54) vorgesehen sind, welche das Hintergehäuse (4) aus der teiloffenen Verriegelungsstellung (24, 34, 40, 49, 57) in die ursprüngliche, voll geschlossene Betriebsstellung (21, 31, 38, 55) ziehen.

## Claims

1. A round baler for agricultural produce, comprising a front housing (2) fixed to a frame, and a rear housing (4) mounted on the front housing (2) so as to be openable by pivoting about an upper horizontal axis (3) for ejection of a bale into a discharge position, wherein latches (19, 25, 35, 45, 51) lock the rear housing (4) to the front housing (2) in a closed operating position and unlock it when a presettable pressing pressure has been reached, **characterised in that** adjusting means (36, 43, 54) or additional latches (22, 26, 46) are provided, through the actuation of which the rear housing (4) is partially opened and held in the locked positions (24, 34, 40, 49, 57) before the latches (19, 25, 35, 45, 51) are released in order to pivot open the rear housing (4).

2. A round baler according to claim 1, **characterised in that** the adjusting means comprise a locking pin rotatably formed as an eccentric (36) or rotatably formed as a cam (43) or, in kinematic reversal, an eccentrically adjustable bearing point (44) of the latch (35).

3. A round baler according to claim 1, **characterised in that** with each latch (25, 45) is associated a second latch (26, 46), the locking projection (29, 48) of which is displaced in relation to the locking projection (28, 47) of the first latch (25, 45) in the opening direction (30) of the rear housing (4).

4. A round baler according to claim 3, **characterised in that** the second latch (26) is permanently held in the release position and, when necessary, is moved into the locking position in which it locks the two housing parts (2, 4) after the first latch (25) has been released and the rear housing (4) has been opened slightly.

5. A round baler according to claim 3, **characterised in that** the second latch (46) is released together with the first latch (45) and is only held in the locking position (49) when necessary in order to lock the two housing parts (2, 4) after the first latch (45) has been lifted up and the rear housing (4) has been opened slightly.

6. A round baler according to claim 1, **characterised in that** a latch (19) has a second locking projection (22) offset in relation to the first locking projection (20) with clearance in the opening direction (23) of the rear housing (4).

7. A rou nd baler according to claim 1, **characterised in that** the latch (51) is directly or indirectly coupled to a hydraulic cylinder (54), and **in that** the slight opening of the rear housing (4) is effected by actuation of a control valve by the operator.

8. A round baler according to one or more of the preceding claims, **characterised in that** the opening path of the rear housing (4) between the closed (21, 31, 38, 55) and partially open (24, 34, 40, 49, 57) locked position is approximately 20 to 100 mm.

9. A round baler according to one or more of the preceding claims, **characterised in that** the eccentric (36), cam (43) or latches (19, 25, 26, 35, 45, 46, 51) are mechanically locked and manually actuated, or **in that** actuation takes place electrically, hydraulically or electrohydraulically.

10. A round baler according to one or more of the preceding claims, **characterised in that** the adjusting means (36, 43, 51) or the latches (19, 26, 46, 51) are controlled as a function of a sensor which signals bale stoppage or a sensor which signals a response by an overload protection means.

11. A round baler according to one or more of the preceding claims, **characterised in that** means (36, 43, 54) are provided which draw the rear housing (4) from the partially open locked position (24, 34, 40, 49, 57) into the original, completely closed operating position (21, 31, 38, 55).

## Revendications

1. Presse à balles rondes pour produits d'ensilage agricoles, formée par un carter avant (2) fixe contre le châssis et un carter arrière (4) monté de manière à pouvoir se rabattre vers le haut autour d'un axe horizontal supérieur (3) dans une position finale pour l'éjection des balles, des loquets de verrouillage (19, 25, 35, 45, 51) verrouillant le carter arrière (4) avec le carter avant (2) dans une position de service fermée et le déverrouillant lorsqu'une pression de compactage pré-réglable est atteinte, **caractérisée en ce qu'**il est prévu des moyens de réglage (36, 43, 54) ou des loquets de verrouillage (22, 26, 46) supplémentaires, par la manoeuvre desquels le carter arrière (4) s'ouvre partiellement et est maintenu dans les positions verrouillées (24, 34, 40, 49, 57) avant que les loquets de verrouillage (19, 25, 35, 45, 51) soient déverrouillés pour le rabattement vers le haut du carter arrière (4).

2. Presse à balles rondes selon la revendication 1, **caractérisée en ce que** les moyens de réglage comportent un boulon de verrouillage conçu sous forme d'excentrique (36) rotatif ou sous forme de came (43) rotative ou, dans une inversion cinématique du mouvement, une zone d'appui (44) du loquet de verrouillage (35) qui peut être décalée de manière excentrique.

3. Presse à balles rondes selon la revendication 1, **caractérisée en ce qu'**à chaque loquet de verrouillage (25, 45) est associé un deuxième loquet de verrouillage (26, 46), dont le bec de verrouillage (29, 48) est toujours décalé dans la direction d'ouverture (30) du carter arrière (4) par rapport au bec de verrouillage (28, 47) du premier loquet de verrouillage (25, 45).

4. Presse à balles rondes selon la revendication 3, **caractérisée en ce que** le deuxième loquet de verrouillage (26) est maintenu en permanence en position de déverrouillage et est amené en cas de besoin en position de verrouillage, dans laquelle ledit deuxième loquet de verrouillage, après le déverrouillage du premier loquet dé verrouillage (25) et une faible ouverture du carter arrière (4), assure le verrouillage des deux parties du carter (2, 4).

5. Presse à balles rondes selon la revendication 3, **caractérisée en ce que** le deuxième loquet de verrouillage (46) est déverrouillé conjointement avec le premier loquet de verrouillage (45) et est maintenu, uniquement en cas de besoin, dans la position de verrouillage (49) afin d'assurer, après le relèvement du premier loquet de verrouillage (45) et une faible ouverture du carter arrière (45), le verrouillage des deux parties du carter (2, 4).

6. Presse à balles rondes selon la revendication 1, **caractérisée en ce qu'**un loquet de verrouillage (19) comporte un deuxième bec de verrouillage (22) décalé par rapport au premier bec de verrouillage (20) selon une distance donnée dans la direction d'ouverture (23) du carter arrière (4).

7. Presse à balles rondes selon la revendication 1, **caractérisée en ce que** le loquet de verrouillage (51) est couplé indirectement ou directement avec un vérin hydraulique (54) et **en ce que** la faible ouverture du carter arrière (4) est effectuée par l'utilisateur au moyen de l'activation d'une soupape de réglage.

8. Presse à balles rondes selon une ou plusieurs des revendications précédentes, **caractérisée en ce que** la trajectoire d'ouverture du carter arrière (4) entre la position de verrouillage fermée (21, 31, 38, 55) et partiellement ouverte (24, 34, 40, 49, 57) est de l'ordre de 20 à 100 mm environ.

9. Presse à balles rondes selon une ou plusieurs des revendications précédentes, **caractérisée en ce que** l'excentrique (36), la came (43) ou les loquets de verrouillage (19, 25, 26, 35, 45, 46, 51) sont verrouillés mécaniquement et sont actionnés manuellement ou **en ce qu'**une manoeuvre électrique, hydraulique ou électro-hydraulique est effectuée.

10. Presse à balles rondes selon une ou plusieurs des revendications précédentes, **caractérisée en ce que** les moyens de réglage (36, 43, 51) ou les loquets de verrouillage (19, 26, 46, 51) sont commandés en fonction d'un capteur qui signale une immobilisation de la balle ou en fonction d'un capteur qui signale une activation de l'embrayage anti-surcharge.

11. Presse à balles rondes selon une ou plusieurs des revendications précédentes, **caractérisée en ce qu'**il est prévu des moyens (36, 43, 54) qui tirent le carter arrière (4) hors de la position de verrouillage partiellement ouverte (24, 34, 40, 49, 57) vers la position de service initiale (21, 31, 38, 55) complètement fermée.
